# EUROPÄISCHE PATENTANMELDUNG

(11) **EP 1 619 065 A1**
(43) Veröffentlichungstag der Anmeldung: **25.01.2006**
(21) Anmeldenummer: 05105447.6
(22) Anmeldetag: 21.06.2005
(51) Int. Cl.: B60K 15/077, F02M 37/10

(54) **Abstützelement für eine Kraftstoff-Fördereinheit**

(30) Priorität: 19.07.2004 DE 102004034842
(71) Anmelder: SIEMENS AKTIENGESELLSCHAFT, 80333 München (DE)
(72) Erfinder: Markefka, Klaus, 61197, Florstadt (DE); Kadler, Matthias, 64521, Gross-Gerau (DE)

(57) **Zusammenfassung**

Ein Abstützelement (9) zur Abstützung einer Kraftstoff-Fördereinheit (2) an einem Boden eines Kraftstoffbehälters weist ein bogenförmiges Element (13) mit einer Abstützfläche (17) auf. Das bogenförmige Element (13) ist an der Unterseite der Kraftstoff-Fördereinheit (2) befestigt und einstückig mit einem Grobfilter (19) gefertigt. Durch den Grobfilter (19) angesaugter Kraftstoff wird über das bogenförmige Element (13) geführt, so dass Schmutzteilchen an einer tangentialen Kante (14) des Abstützelementes (9) zurückgehalten werden.

## Beschreibung

Die Erfindung betrifft ein Abstützelement mit einer Abstützfläche zur Abstützung einer Kraftstoff-Fördereinheit an einem Boden eines Kraftstoffbehälters mit zumindest einem abstehenden, mit der Abstützfläche zur Auflage an dem Boden vorgesehenen Stützfuß. Weiterhin betrifft die Erfindung eine Kraftstoff-Fördereinheit zur Förderung von Kraftstoff aus einem Kraftstoffbehälter eines Kraftfahrzeuges.

Kraftstoff-Fördereinheiten heutiger Kraftfahrzeuge haben in der Regel eine in einem Schwalltopf angeordnete Pumpe, welche Kraftstoff aus dem Schwalltopf heraus fördert. Die Pumpe kann eine von einem Elektromotor angetriebene Pumpenstufe oder eine Saugstrahlpumpe sein. Fördereinheiten, bei welchen eine Saugstrahlpumpe Kraftstoff aus einem Schwalltopf heraus saugt, werden häufig auch als Ansaugeinheiten bezeichnet und sind wie die Fördereinheiten mit einer elektrisch angetriebenen Pumpenstufe ausdrücklich genannt, wenn ein Bauteil als Kraftstoff-Fördereinheit bezeichnet wird.

Solche Abstützelemente werden meist einstückig mit einem Schwalltopf der Kraftstoff-Fördereinheit gefertigt und sind aus der Praxis bekannt. Der aus der Praxis bekannte Schwalltopf weist über seinen Umfang verteilt eine Vielzahl von sich radial erstreckenden Stützfüßen auf. Hierdurch wird die Kraftstoff-Fördereinheit am Boden des Kraftstoffbehälters abgestützt. Die Anordnung der Stützfüße bildet für von radial außerhalb nach unterhalb des Schwalltopfes strömenden Kraftstoff ein Sieb, welches grobe Schmutzpartikel zurückhält. Damit wird das Ansaugen von Kraftstoff mit geringer Verschmutzung von unterhalb des Schwalltopfes ermöglicht.

Nachteilig bei dem bekannten Abstützelement ist, dass anströmende Schmutzpartikel die Bereiche zwischen den Stützfüßen sehr schnell zusetzen und sich zwischen den Stützfüßen dauerhaft verhaken. Dies kann dazu führen, dass der Kraftstoff nicht mehr von unterhalb der Kraftstoff-Fördereinheit angesaugt werden kann. Weiterhin erzeugen die Stützfüße aufgrund ihrer Form eine Punktbelastung, welche zu einer Beschädigung des Bodens des Kraftstoffbehälters führen kann. Insbesondere führen Fertigungstoleranzen der Stützfüße oder Verformungen des Bodens des Kraftstoffbehälters zur Anlage einiger weniger Stützfüße und damit zu einer hohen Punktbelastung.

Der Erfindung liegt das Problem zugrunde, ein Abstützelement der eingangs genannten Art so zu gestalten, dass eine Belastung des Bodens des Kraftstoffbehälters besonders gering gehalten wird und dass eine Behinderung der Strömung in den zentralen Bereich unterhalb der Kraftstoff-Fördereinheit durch Schmutzpartikel besonders gering gehalten wird. Weiterhin liegt der Erfindung das Problem zugrunde, eine Kraftstoff-Fördereinheit zur Förderung von Kraftstoff aus einem Kraftstoffbehälter so weiterzubilden, dass sie eine Punktbelastung des Bodens des Kraftstoffbehälters weitgehend vermeidet.

Dieses Problem wird erfindungsgemäß dadurch gelöst, dass der zumindest eine Stützfuß ein bogenförmiges Element mit einer im an die Kraftstoff-Fördereinheit montierten Zustand tangential zu der Kraftstoff-Fördereinheit weisenden Kante aufweist und dass die tangentiale Kante länger ist als die Breite des bogenförmigen Elements.

Durch diese Gestaltung erfolgt die Abstützung am Boden des Kraftstoffbehälters im Wesentlichen über das zumindest eine bogenförmige Element. Damit wird eine Punktbelastung des Bodens des Kraftstoffbehälters weitgehend vermieden. Zudem werden grobe Schmutzpartikel von der tangentialen Kante zurückgehalten. An der tangentialen Kante befindliche Schmutzpartikel vermögen die Strömung des Kraftstoffs unterhalb der Kraftstoff-Fördereinheit jedoch nicht zu behindern.

Eine kompliziert geformte Unterseite des Schwalltopfes der Kraftstoff-Fördereinheit lässt sich gemäß einer vorteilhaften Weiterbildung der Erfindung vermeiden, wenn das Abstützelement Befestigungsmittel zur Verbindung mit einem Bauteil der Kraftstoff-Fördereinheit aufweist. Durch diese Gestaltung sind die Stützfüße von der Kraftstoff-Fördereinheit getrennt und können zudem aus einem, den Boden des Kraftstoffbehälters nur sehr gering belastenden Material gefertigt sein.

Zur weiteren Verringerung der Punktbelastung des Bodens des Kraftstoffbehälters trägt es gemäß einer anderen vorteilhaften Weiterbildung der Erfindung bei, wenn das bogenförmige Element als Ringelement ausgebildet ist.

Zur weiteren Verringerung der Punktbelastung des Bodens des Kraftstoffbehälters trägt es gemäß einer anderen vorteilhaften Weiterbildung der Erfindung bei, wenn mehrere bogenförmige Elemente über den Umfang des Abstützelementes verteilt angeordnet sind.

Von unterhalb der Kraftstoff-Fördereinheit angesaugter Kraftstoff weist gemäß einer anderen vorteilhaften Weiterbildung der Erfindung eine besonders geringe Verschmutzung auf, wenn das bogenförmige Element radial außerhalb eines zur Montage im Zentrum der Kraftstoff-Fördereinheit angeordneten Grobfilters der Kraftstoff-Fördereinheit angeordnet ist.

Zur Vereinfachung der Montage des Grobfilters und des Stützfußes an der Kraftstoff-Fördereinheit trägt es gemäß einer anderen vorteilhaften Weiterbildung der Erfindung bei, wenn der Grobfilter einteilig mit dem bogenförmigen Element gefertigt ist.

Das erfindungsgemäße Abstützelement lässt sich besonders kostengünstig fertigen, wenn die Befestigungsmittel, der Grobfilter und das bogenförmige Element einstückig aus Kunststoff im Spritzgussverfahren gefertigt sind.

Das erfindungsgemäße Abstützelement weist eine besonders hohe Stabilität auf, wenn zumindest ein radial ausgerichteter Steg von dem bogenförmigen Element radial nach innen geführt ist.

Die Abstützfläche könnte ausschließlich auf dem bogenförmigen Element angeordnet sein. Zur Vergrößerung der Abstützfläche trägt es gemäß einer anderen vorteilhaften Weiterbildung der Erfindung bei, wenn die Abstützfläche auf dem bogenförmigen Element und den radial nach innen geführten Stegen angeordnet ist. Dies trägt zur weiteren Verringerung der Belastung des Bodens des Kraftstoffbehälters bei.

Zur weiteren Verringerung des Schmutzeintrags in den Bereich unterhalb der Kraftstoff-Fördereinheit trägt es gemäß einer anderen vorteilhaften Weiterbildung der Erfindung bei, wenn zumindest ein Kanal zur Führung von Kraftstoff in einen zentralen Bereich unterhalb der Kraftstoff-Fördereinheit über das bogenförmige Element geführt ist und/oder zwischen zwei bogenförmigen Elementen geführt ist. Bei dem über das bogenförmige Element geführten Kanal bildet das bogenförmige Element im montierten Zustand einen an dem Boden des Kraftstoffbehälters anliegenden Schweller. Unter die Kraftstoff-Fördereinheit einströmender Kraftstoff muss den Schweller überwinden, so dass am Boden des Kraftstoffbehälters liegende Schmutzteilchen zuverlässig zurückgehalten werden.

Schmutzpartikel in einer Strömung von Kraftstoff zwischen zwei bogenförmigen Elementen lassen sich gemäß einer anderen vorteilhaften Weiterbildung der Erfindung weitgehend zurückhalten, wenn mehrere bogenförmige Elemente in tangentialer Richtung einander überlappen, so dass tangentiale Kanten benachbarter bogenförmiger Elemente einander gegenüberstehen.

Durch diese Gestaltung bilden die bogenförmigen Elemente ein Labyrinth, welches Schmutzpartikel zurückhält.

Die Kraftstoff-Fördereinheit vermag zuverlässig Kraftstoff aus dem Kraftstoffbehälter anzusaugen, sobald der Kraftstoffspiegel zumindest die Höhe des bogenförmigen Elements aufweist, wenn die Oberkante des bogenförmigen Elements auf der Höhe der Unterkante des Grobfilters angeordnet ist und wenn die radial ausgerichteten Stege das bogenförmige Element von dem Grobfilter radial beabstanden.

Das zweitgenannte Problem, nämlich die Schaffung einer Kraftstoff-Fördereinheit, welche eine Punktbelastung des Bodens des Kraftstoffbehälters weitgehend vermeidet, wird erfindungsgemäß gelöst durch Befestigungsmittel zur Verbindung mit einem Abstützelement nach einem der vorhergehenden Ansprüche.

Hierdurch lässt sich ein unmittelbarer Kontakt der Unterseite der Kraftstoff-Fördereinheit mit dem Boden des Kraftstoffbehälters vermeiden. Daher können von der Kraftstoff-Fördereinheit unmittelbar keine Kräfte in den Boden des Kraftstoffbehälters eingeleitet werden.

Eine Vorfilterung des unter die Kraftstoff-Fördereinheit einströmenden Kraftstoffs lässt sich gemäß einer anderen vorteilhaften Weiterbildung der Erfindung einfach erreichen, wenn an der Unterseite der Kraftstoff-Fördereinheit angeordnete einzelne, ein Labyrinth bildende Vorsprünge an dem bogenförmigen Element des Abstützelementes aufliegen.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine in einem Kraftstoffbehälter eines Kraftfahrzeuges montierte Kraftstoff-Fördereinheit mit einem Abstützelement,
- Fig. 2: eine perspektivische Darstellung von unten auf die Kraftstoff-Fördereinheit aus Figur 1 mit einer ersten Ausführungsform des Abstützelementes,
- Fig. 3: eine Ansicht von oben auf das Abstützelement aus Figur 1,
- Fig.4-Fig.6: jeweils eine weitere Ausführungsform des Abstützelementes aus Figur 1 in einer Ansicht von unten.

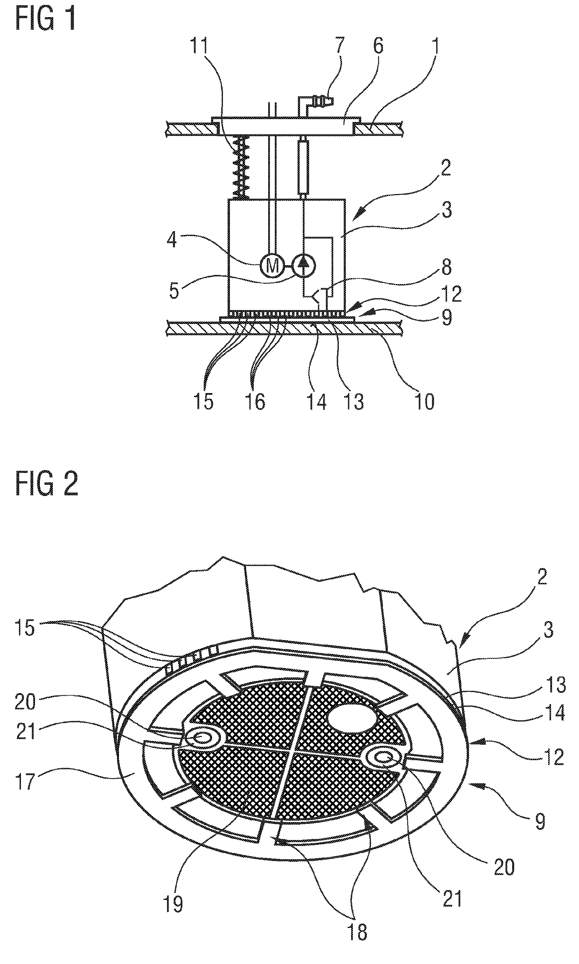

Figur 1 zeigt schematisch eine in einem Kraftstoffbehälter 1 angeordnete Kraftstoff-Fördereinheit 2. Die Kraftstoff-Fördereinheit 2 hat eine, in einem Schwalltopf 3 angeordnete, von einem Elektromotor 4 angetriebene Pumpenstufe 5. Die Pumpenstufe 5 fördert Kraftstoff aus dem Schwalltopf 3 zu einem auf einem Verschlussdeckel 6 angeordneten Anschlussstutzen 7. An dem Anschlussstutzen 7 kann eine nicht dargestellte, zu einer Brennkraftmaschine geführte Vorlaufleitung angeschlossen werden. Weiterhin fördert die Pumpenstufe 5 Kraftstoff zu einer im Bodenbereich des Schwalltopfes 3 angeordneten Saugstrahlpumpe 8. Die Saugstrahlpumpe 8 saugt Kraftstoff von der Unterseite des Schwalltopfes 3 an. Die Kraftstoff-Fördereinheit 2 stützt sich mit einem Abstützelement 9 an dem Boden 10 des Kraftstoffbehälters 1 ab. Ein Federelement 11 spannt die Kraftstoff-Fördereinheit 2 in Richtung des Bodens 10 vor. Das Abstützelement 9 weist einen Stützfuß 12 mit einem als Ringelement ausgebildeten bogenförmigen Element 13 auf. Das bogenförmige Element 13 hat damit eine umlaufende Kante 14, welche länger ist als die auf dem Boden 10 des Kraftstoffbehälters aufliegende Breite des bogenförmigen Elements 13. An der dem Abstützelement 9 zugewandten Seite hat der Schwalltopf 3 der Kraftstoff-Fördereinheit 2 mehrere labyrinthartig angeordnete Vorsprünge 15, welche auf dem bogenförmigen Element 13 aufliegen. Zwischen den labyrinthartig angeordneten Vorsprüngen 15 wird ein Kanal 16 gebildet, durch welchen Kraftstoff von außerhalb der Kraftstoff-Fördereinheit 2 unter die Kraftstoff-Fördereinheit 2 strömt. Damit wird von der Saugstrahlpumpe 8 angesaugter Kraftstoff zunächst über das als Ringelement ausgebildete bogenförmige Element 13 geführt, so dass Schmutzteilchen an der am Boden 10 aufliegenden Kante 14 des Abstützelementes 9 zurückgehalten werden können. Anschließend strömt der Kraftstoff durch den von den labyrinthartigen Vorsprüngen 15 des Schwalltopfes 3 gebildeten Kanal 16, wo weitere Schmutzteilchen zurückgehalten werden.

An der Unterseite hat das bogenförmige Element 13 eine Abstützfläche 17 zur Anlage an dem Boden 10 des Kraftstoffbehälters 1. Diese Abstützfläche 17 ist in Figur 2 in einer perspektivischen Darstellung von unten und damit von der Seite des Bodens 10 des Kraftstoffbehälters 1 aus gesehen auf die Kraftstoff-Fördereinheit 2 mit dem Abstützelement 9 zu erkennen. Weiterhin zeigt Figur 2, dass von dem bogenförmigen Element 13 mehrere Stege 18 radial nach innen zu einem Grobfilter 19 geführt sind. In dem Grobfilter 19 sind als Befestigungsausnehmungen ausgebildete Befestigungsmittel 20 zur Befestigung des Schwalltopfes 3 mit Rastelementen 21 angeordnet. Der Grobfilter 19, die Stege 18 und das bogenförmige Element 13 sind einstückig aus Kunststoff im Spritzgussverfahren gefertigt. Der Grobfilter 19 wird dabei von einem Gitter gebildet und ist unmittelbar vor der Saugseite der Saugstrahlpumpe 8 angeordnet. Die Abstützfläche 17, mit der sich die Kraftstoff-Fördereinheit 2 an dem Boden 10 des Kraftstoffbehälters 1 abstützt, erstreckt sich von dem bogenförmigen Element 13 über die radialen Stege 18. Die Kraftstoff-Fördereinheit kann abweichend von dem dargestellten Ausführungsbeispiel auch als so genannte Ansaugeinheit ohne elektromotorisch angetriebene Pumpenstufe ausgebildet sein. Bei solchen Ansaugeinheiten fördert meist eine Saugstrahlpumpe Kraftstoff aus dem Schwalltopf 3.

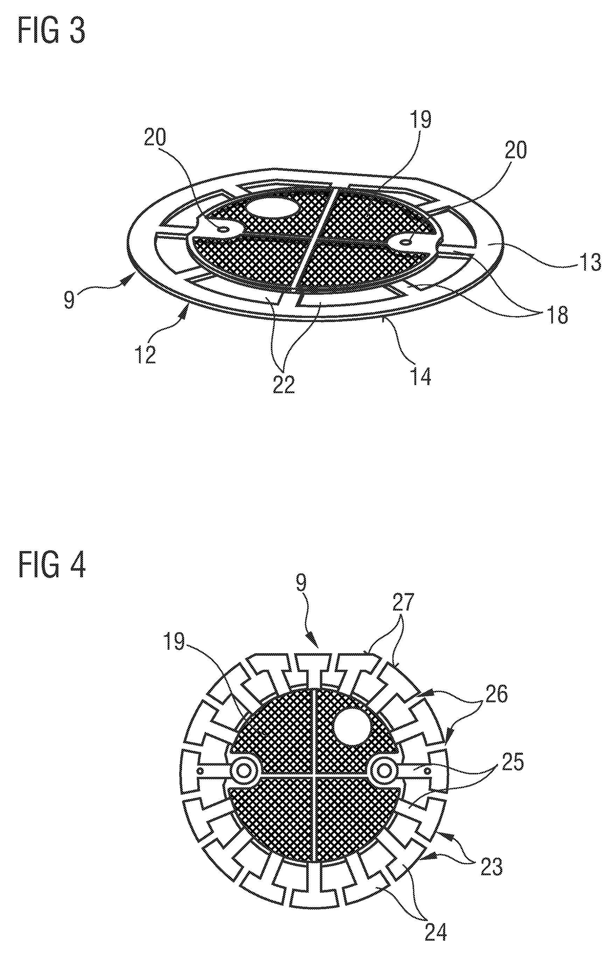

Figur 3 zeigt perspektivisch das Abstützelement 9 von oben und damit von der Seite des in Figur 1 dargestellten Schwalltopfes 3. Hierbei ist zu erkennen, dass die Unterseite des Grobfilters 19 auf der Oberseite der radial geführten Stege 18 aufliegt. Die Stege 18 beabstanden das bogenförmige Element 13 von dem Grobfilter 19 in radialer Richtung, wodurch zwischen dem bogenförmigen Element 13 und dem Grobfilter 19 ein vertikaler Kanal 22 gebildet ist, durch den der Kraftstoff von dem zwischen den in Figur 1 dargestellten, labyrinthartig angeordneten Vorsprüngen 15 unter die Kraftstoff-Fördereinheit 2 einströmen kann.

Figur 4 zeigt eine weitere Ausführungsform des Abstützelementes 9 aus Figur 1 in einer Ansicht von unten. Diese Ausführungsform unterscheidet sich von der aus den Figuren 2 und 3 dadurch, dass mehrere einzelne Stützfüße 23 mit jeweils einem bogenförmigen Element 24 über radial geführte Stege 25 mit dem im Zentrum angeordneten Grobfilter 19 verbunden sind. Damit begrenzen die Stützfüße 23 ebenfalls einen Kanal 26, durch den Kraftstoff zu dem Grobfilter 19 strömen kann. Die bogenförmigen Elemente 24 haben jeweils eine tangentiale Kante 27, welche größere Abmessungen aufweist als die Breite der bogenförmigen Elemente 24.

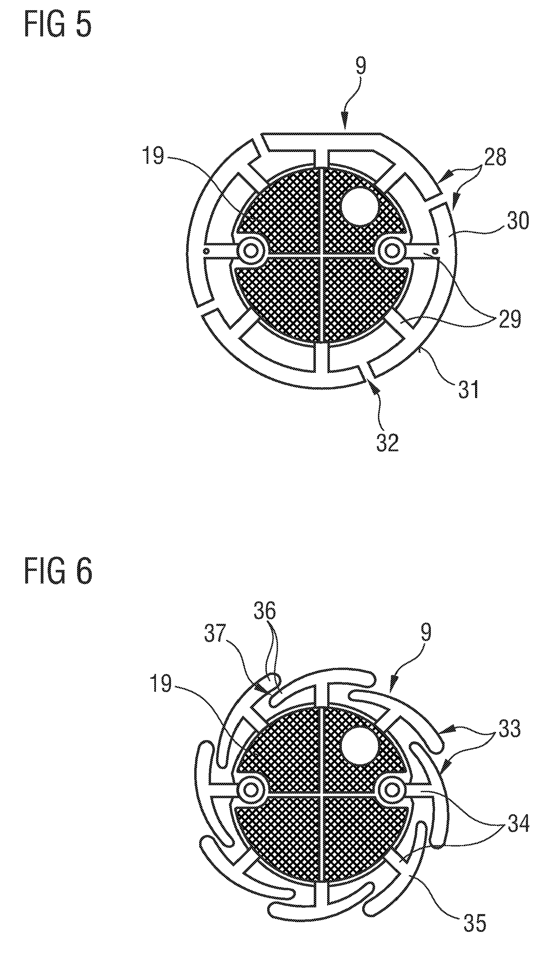

Figur 5 zeigt eine weitere Ausführungsform des Abstützelementes 9 aus Figur 1, bei der mehrere Stützfüße 28 jeweils ein von zwei radial geführten Stegen 29 gehaltenes, bogenförmiges Element 30 mit einer tangentialen Kante 31, welche länger ist als die Breite der bogenförmigen Elemente 30, aufweisen. Auch hier ist zwischen den Stützfüßen 28 ein Kanal 32 zur Führung des Kraftstoffs zu dem Grobfilter 19 angeordnet.

Figur 6 zeigt eine weitere Ausführungsform des Abstützelementes 9, bei dem mehrere Stützfüße 33 jeweils einen radial geführten Steg 34 und ein bogenförmiges Element 35 aufweisen. Die bogenförmigen Elemente 35 einander benachbarter Stützfüße 33 überlappen einander in tangentialer Richtung, so dass ihre tangentialen Kanten 36 einander gegenüberstehen. Damit bilden die Stützfüße 33 einen labyrinthartigen Kanal 37, durch den Kraftstoff zu dem Grobfilter 19 strömen kann.

## Patentansprüche

1. Abstützelement mit einer Abstützfläche zur Abstützung einer Kraftstoff-Fördereinheit an einem Boden eines Kraftstoffbehälters mit zumindest einem abstehenden, mit der Abstützfläche zur Auflage an dem Boden vorgesehenen Stützfuß, **dadurch gekennzeichnet, dass** der zumindest eine Stützfuß 12, 23, 28, 33) ein bogenförmiges Element (13, 24, 30, 35) mit einer im an die Kraftstoff-Fördereinheit (2) montierten Zustand tangential zu der Kraftstoff-Fördereinheit (2) weisenden Kante (14, 27, 31, 36) aufweist und dass die tangentiale Kante (14, 27, 31, 36) länger ist als die Breite des bogenförmigen Elements (13, 24, 30, 35).

2. Abstützelement nach Anspruch 1, **dadurch gekennzeichnet, dass** das Abstützelement (9) Befestigungsmittel (20) zur Verbindung mit einem Bauteil der Kraftstoff-Fördereinheit (2) aufweist.

3. Abstützelement nach Anspruch 1 oder 2, **dadurch gekennzeichnet, dass** das bogenförmige Element (13) als Ringelement ausgebildet ist.

4. Abstützelement nach einem der vorhergehenden Ansprüche, **dadurch gekennzeichnet, dass** mehrere bogenförmige Elemente (24, 30, 35) über den Umfang des Abstützelementes (9) verteilt angeordnet sind.

5. Abstützelement nach einem der vorhergehenden Ansprüche, **dadurch gekennzeichnet, dass** das bogenförmige Element (13, 24, 30, 35) radial außerhalb eines zur Montage im Zentrum der Kraftstoff-Fördereinheit (2) angeordneten Grobfilters (19) der Kraftstoff-Fördereinheit (2) angeordnet ist.

6. Abstützelement nach einem der vorhergehenden Ansprüche, **dadurch gekennzeichnet, dass** der Grobfilter (19) einteilig mit dem bogenförmigen Element (13, 24, 30, 35) gefertigt ist.

7. Abstützelement nach einem der vorhergehenden Ansprüche, **dadurch gekennzeichnet, dass** die Befestigungsmittel (20), der Grobfilter (19) und das bogenförmige Element (13, 24, 30, 35) einstückig aus Kunststoff im Spritzgussverfahren gefertigt sind.

8. Abstützelement nach einem der vorhergehenden Ansprüche, **dadurch gekennzeichnet, dass** zumindest ein radial ausgerichteter Steg (18, 25, 29, 34) von dem bogenförmigen Element (13, 24, 30, 35) radial nach innen geführt ist.

9. Abstützelement nach einem der vorhergehenden Ansprüche, **dadurch gekennzeichnet, dass** die Abstützfläche (17) auf dem bogenförmigen Element (13, 24, 30, 35) und den radial nach innen geführten Stegen (18, 25, 29, 34) angeordnet ist.

10. Abstützelement nach einem der vorhergehenden Ansprüche, **dadurch gekennzeichnet, dass** zumindest ein Kanal (16, 22, 26, 32, 37) zur Führung von Kraftstoff in einen zentralen Bereich unterhalb der Kraftstoff-Fördereinheit (2) über das bogenförmige Element (13, 24, 30, 35) geführt ist und/oder zwischen zwei bogenförmigen Elementen (13, 24, 30, 35) geführt ist.

11. Abstützelement nach einem der vorhergehenden Ansprüche, **dadurch gekennzeichnet, dass** mehrere bogenförmige Elemente (35) in tangentialer Richtung einander überlappen, so dass tangentiale Kanten (36) benachbarter bogenförmiger Elemente (35) einander gegenüberstehen.

12. Abstützelement nach einem der vorhergehenden Ansprüche, **dadurch gekennzeichnet, dass** die Oberkante des bogenförmigen Elements (13, 24, 30, 35) auf der Höhe der Unterkante des Grobfilters (19) angeordnet ist und dass die radial ausgerichteten Stege (18, 25, 29, 34) das bogenförmige Element (13, 24, 30, 35) von dem Grobfilter (19) radial beabstanden.

13. Kraftstoff-Fördereinheit zur Förderung von Kraftstoff aus einem Kraftstoffbehälter eines Kraftfahrzeuges, **gekennzeichnet durch** Befestigungsmittel (20) zur Verbindung mit einem Abstützelement (9) nach einem der vorhergehenden Ansprüche.

14. Kraftstoff-Fördereinheit nach Anspruch 13, **dadurch gekennzeichnet, dass** an der Unterseite der Kraftstoff-Fördereinheit (2) angeordnete einzelne, ein Labyrinth bildende Vorsprünge (15) an dem bogenförmigen Element (13, 24, 30, 35) des Abstützelementes (9) aufliegen.
